# EUROPEAN PATENT APPLICATION

(11) **EP 2 858 334 A1**
(43) Date of publication of application: **08.04.2015**
(21) Application number: 14182418.5
(22) Date of filing: 27.08.2014
(51) Int. Cl.: H04M 1/04, H04M 1/725

(54) **NFC-capable holder for mobile communications device**

(30) Priority: 03.10.2013 US 201314045263
(71) Applicant: BlackBerry Limited, Waterloo, ON N2K 0A7 (CA)
(72) Inventor: Klassen, Gerhard Dietrich, 21140 Malmö (SE)
(74) Representative: Patel, Binesh

(57) **Abstract**

A near-field communication (NFC) capable mobile communication device (120) and a releaseable support (400) are described. The support can include one or more magnets (410) or other devices (610) disposed so as to releaseably engage the NFC-capable mobile communication device (120); and one or more persistent memorys (430) accessible by an NFC system (8130) of the NFC-capable mobile communication device (120), the persistent memory(ies) (430) comprising data suitable for causing the NFC-capable mobile communication device (120) to execute one or more wireless communication functions.

## Description

### Field of the Disclosure

This application relates to the field of communications, and more particularly, to the use of magnetic and other NFC-capable physical supports for mobile communication devices.

### Background

With the increased use of mobile technologies, the opportunities for mobile devices to interact with their environments at various locations have also increased. At they move from location to location, mobile devices can interact with different wireless networks, devices and systems.

There is a need for improved control of these interactions.

### Description of drawings

Examples of various aspects and embodiments of the invention are shown in the drawings, and described therein and elsewhere throughout the disclosure. In the drawings, like references indicate like parts.

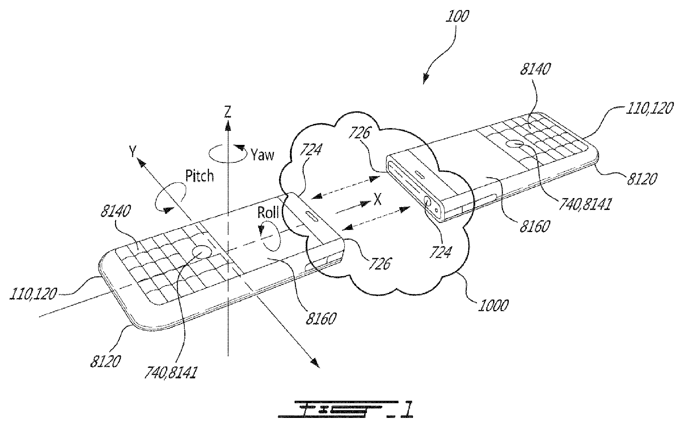

Figures 1-8 are schematic diagrams of systems and devices useful in implementing various aspects of the disclosure.

### Detailed Description

The disclosure relates to supports for near-field communication (NFC) capable mobile communication devices. In various aspects and embodiments, a support in accodance with the disclosure comprises one or more magnets disposed so as to magnetically engage, and thereby releaseably support, an NFC-capable mobile communication device; and persistent memory accessible by an NFC system of the NFC-capable mobile communication device, the persistent memory comprising data for causing the NFC-capable mobile communication device to execute at least one wireless communication function.

In further aspects and embodiments, the disclosure provides near-field communication (NFC) capable mobile communication devices comprising NFC system(s) configured for data transfer from other NFC-capable device(s); magnetic field sensor(s) configured for detecting proximity of magnet(s) and generating corresponding magnetic field proximity signal(s); housing(s) engageable by the magnet(s) and configured for supporting the mobile communication device when engaged by the at least one magnet; and processor(s) configured, conditioned upon receipt of magnetic field proximity signal(s) generated by the magnetic field sensor(s), to interpret data transferred from the at least one other NFC device, and execute corresponding wireless communication function(s).

In further aspects and embodiments, the disclosure provides near-field communication (NFC) capable mobile communication devices comprising NFC system(s) configured for data transfer from other NFC-capable device(s); housing(s) comprising one or more magnets configured for supporting the mobile communication device when adjacent to ferrous or otherwise magnetic support device(s), or support devices capable of magnetically interacting with magnets; and processor(s) configured to interpret data transferred from memory associated with NFC device(s) attached to the magnetic support device(s), and, based at least partly on the interpretation, to execute a corresponding wireless communication function.

In various aspects and embodiments wireless communication function(s) executed by supports and/or mobile communication devices in accordance with the disclosure include establishing wireless communication sessions with active NFC-capable device(s). In the same and other embodiments, such wireless communication functions comprise maintaining established wireless communication session(s) with active NFC-capable device(s).

In various aspects and embodiments, in which either supports and/or mobile communication devices in accordance with the disclosure comprise plurality(ies) of magnets, the at least one wireless communication function to be executed can be determined, at least partly, based on an orientation of the NFC-capable mobile communication device relative to the plurality of magnets.

In various aspects and embodiments, either supports and/or mobile communication devices in accordance with the disclosure comprise close-proximity wireless battery chargers.

In other aspects, the disclosure provides computer program products having a non-transitory computer readable medium tangibly embodying computer executable code which, when executed by a processor of a NFC-enabled device or networked storage resource, causes the respective device or resource to perform any methods or aspects of the disclosure.

Near-field communication(s) (NFC) are wireless communications between two or more suitably-configured devices when the devices are placed or otherwise disposed within a desired, typically relatively proximity to one another. Such communications can, for example, be initiated on a fully or partially automatic basis when the two or more devices are placed within desired proximity of one another, and can occur between any two or more of active and/or passive NFC devices.

As will be appreciated by those skilled in the relevant arts, once they have been made familiar with this disclosure, NFC communications in accordance with this disclosure can be conducted according to any suitable protocols, including a number of protocols now in widespread public use, as well as protocols yet to be developed.

In general, an NFC transaction, or data transfer, may be initiated by bringing two or more NFC-enabled devices into close proximity of one another. "Close proximity" can, as will be apparent to those skilled in the relevant arts, once they have been made familiar with this disclosure, mean any proximity suitable to a desired purpose, and typically means sufficiently close that it may be presumed that communications between the two or more NFC devices is desired. For current NFC applications, for example, "close proximity" can mean one or several centimeters, or shorter or longer distances, depending for example upon the purpose and nature of the NFC transaction and the NFC-enabled devices. The action of bringing such NFC-enabled devices into sufficiently close proximity may trigger automatic or semiautomatic activation of an NFC circuit, and/or an NFC communication. A NFC transaction, or NFC data transfer, may include one NFC-enabled device transferring data to the other, or two or more devices each transferring and/or receiving data from at least one of the other devices. Where devices both transmit and receive data from one another through an NFC transaction, this may be called a NFC data interchange.

For purposes of this disclosure, NFC communications may be conducted according to any desired wireless communications protocol(s), including for example those published or otherwise adopted by the various NFC and/or Radio Frequency Identification (RFID) industry federations, councils, groups, and boards, and their members, as well as any or all of Bluetooth, Wi-Fi, or WIN wireless protocols, including for example any or all of Code Division Multiple Access (CDMA), Time Division Multiple Access (TDMA), Frequency Division Multiple Access (FDMA), Orthogonal Frequency Division Multiple Access (OFDMA), Single Carrier Frequency Division Multiple Access (SC-FDMA), GSM, 3GPP, 4G, Wi-Fi Direct, or other wireless protocols.

An example of an NFC system 100 suitable for use in implementing various aspects of the disclosure is shown in Figure 1. In the embodiment shown in Figure 1, system 100 comprises two active NFC devices 110, in the form of smartphones or other wireless handheld or mobile devices 120. Bringing active NFC-capable devices 110, 120 close enough together, by for example moving them physically toward each other into very close proximity, or into actual physical contact, can provide an operationally easy interface to set up, and initiate a wireless NFC connection.

For example, in the embodiment illustrated in Figure 1, relative movement of the devices 110, 120 toward one another may induce the Hall effect in a magnetic field sensor 726 incorporated within one or both of the devices, and so trigger execution of an NFC query and authorization process and, conditioned upon authorization, establishment of a uni- or bi-directional wireless communication session between the devices. In one non-limiting example, one or both of devices 110, 120 is provided with either a magnet 724 or a magnetometer, i.e., a magnet sensor 726, such as a Hall effect sensor or magneto-resistive sensor, or both. The devices 724, 726 may be matched in a single touch or other gesture adapted to bring the devices into suitably close proximity (sometimes termed a "kiss" gesture because the two devices 110, 120 typically touch or "kiss" each other or are very close and in adjacent proximity).

An example of a suitable proximity for such embodiments may be in the range of about 10 to 20 mm, but the range may be more or less depending on the strength of the magnets and the purposes for which the device(s) 110, 120 and/or system 100 is intended. The sensor(s) 726 on each device 110, 120 may be aligned to the magnet on the respective other device, as illustrated in Figure 1. One or both of the sensors 726 senses ("sees") the corresponding magnet 724 pursuant to the Hall effect, causing a voltage variation or other signal to be generated by the sensor and transmitted to a processor, so as to activate an NFC circuit to communicate with the other device using the protocol of an associated NFC Stack or other wireless communication(s) subsystem or device(s). The devices 110 can then communicate with each other using any NFC protocol suitable for the intended purpose.

Establishment of NFC communications sessions between the devices 110, 120 can be conditioned on suitably-adapted authorizations, using, for example, PIN numbers and/or other security keys.

Interaction between active NFC devices 110 as shown, for example, in Figure 1, can be considered peer-to-peer NFC interactions.

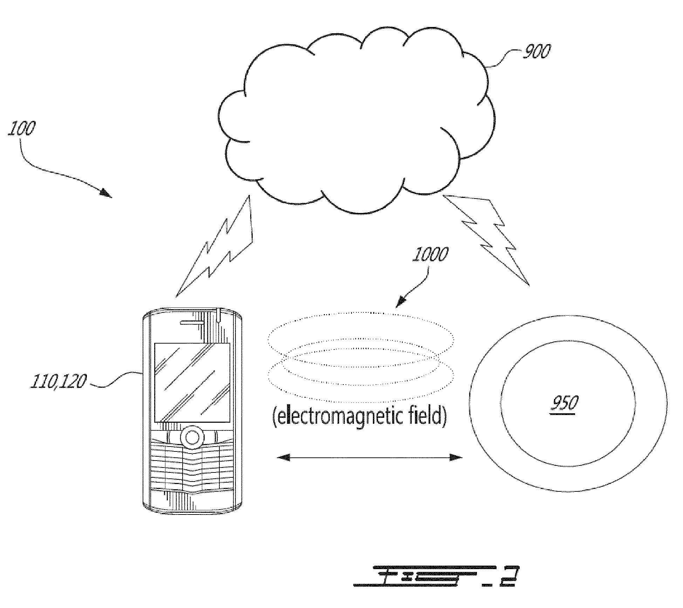

Figure 2 illustrates an example of another NFC system 100 suitable for use in implementing various aspects of the disclosure. In the embodiment shown in Figure 2, system 100 comprises an active NFC device 110, in the form of a smartphone or other wireless handheld or mobile device 120, and a passive NFC device 950 such as an RFID or other NFC tag, which may for example be attached to an NFC poster, or 'smart' poster. Bringing an active NFC-capable device 110, 120 close enough to a passive device 950 such as a tag embedded within or otherwise attached to a poster can cause query, authorization, and/or data transfer processes to fully or semi-automatically execute using magnets, Hall effect sensors, and/or other proximity-detecting mechanisms as described above and elsewhere herein.

In some embodiments, an active 110, 120 or passive device 950 can be actively powered or can include a battery-less and/or passive NFC card. An NFC card may include an NFC chip, such as a memory-based chip or a processor-based chip, and an NFC antenna which, in some examples, can be tuned for 13.56 MHz. The NFC chip can be adapted to carry out actions necessary for communication using the NFC protocol including but not limited to modulation, demodulation, encoding and decoding. Suitable NFC chips for this application may include chips using MIFARE^{®} technology from Koninklijke Philips Electronics N.Y. of the Netherlands and chips using FeliCa*™* technology from Sony Corporation of Japan. The NFC card can be embedded in a poster or any other device, apparatus or structure.

A passive NFC device 950 in accordance with the invention can comprise memory(ies), including both volatile and persistent (i.e., non-transient) media for storing data readable by active NFC (i.e., wireless) device(s) 110, 112. Data stored by passive device(s) 950 and read by active device(s) 110, 112 can include any data suitable for desired purpose(s). For example, a passive device 950 affixed to an informational document such as an advertising or instructional poster can store, for reading by one or more active device(s) 110, any information desired to be imparted to the device(s) 110 and/or users thereof. For example, a device 950 affixed to an advertising poster can store information related to a product, such as an item of clothing, an entertainment event, or a food product purchasable by a user of a device 110.

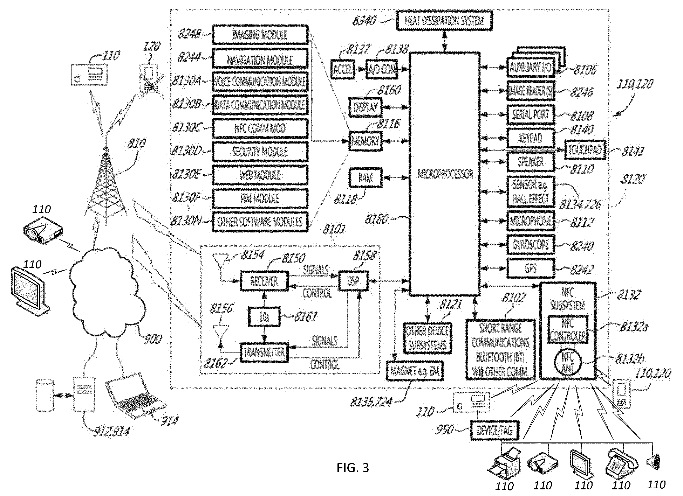

Alternatively, or in addition, a device 950 can store data such as a uniform resource locator (URL) or other address information, such as a telephone number, readable by active device(s) 110 and suitable for directing a processor associated with the device(s) 110 to establish one or more uni- or multi-direction communications sessions with commonly-controlled and/or third-party resources via one or more networks 900, as shown in Figures 2 and 3.

Such networked resources can, for example, include vendor, enterprise, or other servers, computers, smartphones, peripherals, etc.

A somewhat more general embodiment of a system 100 for implementing aspects of the disclosure is shown schematically in Figure 3. In the embodiment of Figure 3, an active wireless handheld device 110, 120 is configured for communication with a wide variety of external devices via a number of communications (sub)systems. For example, using an NFC (sub)system 8132, the device 110 is configured to communicate with any one or more of passive NFC device(s) 950, such as RFID or other NFC tags; optionally non-mobile active device(s) 110, such as stationary computers or other devices, including for example vendor point-of-sale transaction devices); and/or NFC-capable mobile devices 120 such as smartphones and/or laptop, palmtop, and/or tablet computers.

As explained further below, the device 110, 120 shown in Figure 3 is further capable, via wireless communications (sub)system 8101, of communicating with a wide range of devices, including for example server(s) 912 and/or other computers 914 via the internet, the public switched telephone network (PSTN) and/or other wired wide-area or local-area public or private network(s) 900, and/or one or more smartphones, computers 914, servers 912, and other active systems 110 via cellular and/or other wireless telephone networks. For example, an active NFC device 110, 120 may be communicatively coupled to one or more wireless local area networks (WLANs), such as a Wireless Fidelity (WiFi) network, or a wireless wide area network (WWAN) such as 3GPP or 4G Long Term Evolution (LTE) network (not shown). By way of non-limiting example, and as will be appreciated by those skilled in the relevant arts, WiFi is typically deployed as a WLAN that may extend home and business networks to wireless medium and may follow an IEEE 802.11, WiFi Direct, or other standard. A wireless communications connection may also be established using, for example, short-range communications subsystems which may include an infrared device and associated circuits and components as described above, or a Bluetooth communications module, to provide for communication with similarly-enabled systems and devices as well as the NFC communications.

Figure 3 shows a non-limiting example of a range of various functional components that may be included in an exemplary handheld or other mobile wireless communications device 120. In the example shown, device 110, 120 includes, among other components, housing(s) 8120; input device(s) such as keypad(s) 8140, touchpads 8141/740, microphone(s) 8112, accelerometer(s) 8137, analog/digital (a/d) converter(s) 8138, touchscreen display(s) 8160, hall effect or other field/proximity sensor(s) 8134, 726, gyroscope(s) 8240, global positioning system(s) (GPS(s)) 8242, and optical or image reader(s) 8246, such as one or more digital still and video cameras and/or barcode readers, quick response (QR) readers, or other scanners; output device(s) such as touchscreen or other display(s) 8160, speakers(s) 8110, and magnet(s) or other field/proximity generator(s) 8135, 724; and input/output (1/0) device(s) such as uniform serial bus (USB) auxiliary input/output port(s) 8106, parallel or serial port(s) 8108, NFC (sub)system(s) 8132, including Bluetooth and/or other short-range communication (sub)system(s), and wireless/radio transceiver (sub)system(s) 8101.

As will occur to those skilled in the relevant arts, device(s) 110, 120 may include any of a wide variety of these and other components and (sub)systems, in any desired combination(s); and they may interact in any of a wide variety of ways, in addition to those described herein.

As will further be understood by those skilled in the relevant arts, handheld device(s) 120 can comprise any of a very wide range of mobile devices, including for example cellphones, smartphones, and other radio-based communications devices, as well as laptop, palmtop, and tablet computers. "Handheld" means portable and operable using one or both hands; and, in the case of smart phones, can but does not necessarily mean devices that are roughly the size of an average human palm.

One or more processors 8180, 8158, 8138, 8132(a), etc., working singly or in any desirable or otherwise suitable combinations, can use inputs generated and/or otherwise provided by any one or more of the various input device(s) input device(s) 8140, 8141 / 740, 8112, 8137, 8138, 8160, 8134/726, 8240, 8242, 8246, 8106, 8108, 8132, 8101 and locally and/or remotely-accessible peripheral devices, such as printers, servers, telephones, computers, etc., to generate, according to suitably-configured logic rules, output signals suitable for processing by any one or more of the various output device(s) 8160, 8110, 8135 / 724, 8106, 8108, 8132, 8101, and locally and/or remotely-accessible peripheral devices, etc..

Any or all of processor(s) 8180, 8158, 8138, 8132(a), etc., along with any other desired components and/or (sub)systems incorporated, by a device 120 may be protectively and/or functionally contained within housing 8120(s) coupled, as for example by means of suitably-configured buses, etc., between the various memory, input, output, and auxiliary devices (such as battery(ies), solar power generators, etc) in order to perform the functions disclosed herein. Processor(s) 8180, 8158, 8138, 8132(a) may be of any suitable form(s). For example, CPU(s) 8180 may comprise one or more microprocessors chip contained on or otherwise attached to one or more circuit boards within housing(s) 8120. CPU(s) 8180 can provide general command and control functions including, for example, operation of the display 8160, as well as the overall operation of the mobile device 810, in response to received information and inputs, such as in response to actuation of keys on the keypad 8140 by the user. Processors, 8158, 8138, 8132(a), etc., may be provided to control specialized functions such as operation of NFC and other particular communications channels.

Logic rules suitable for use by processors 8180, 8158, 8138, 8132(a) in generating such outputs can be accessed from any suitable locally and/or remotely located source(s), including, for example, any one or more applications modules 8130A - N, 8244, 8248, etc., as, for example, explained herein. Such rules and modules can be provided in any form(s) suitable for achieving the purposes addressed herein, including for example software instructions stored in transient (volatile) and/or non-transient (persistent) memory, firmware, and hard-programmed hardware device(s) or component(s).

Memory(ies) 8118, 8116, etc., which can be of any form compatible with the purposes disclosed herein, including, for example, flash, EEPROM, RAM, ROM, disk, register, etc., can be accessed, controlled, and otherwise used 8180, 8158, 8138, 8132(a), etc., for reading data used in the various processes described herein, for storing output so generated, and for holding executable forms of suitably-configured application and/or module instruction sets. Such stored data may, for example include operating system and other software executed by the processing device 8180.

As shown in Figure 3, an active NFC device 110 can comprise multiple communications abilities, and thus may have the ability to conduct concurrent communications sessions with other devices 110, 950, 912, 914, etc., using NFC voice, and/or other communication means. For example, as illustrated, NFC capable device 110 may be engaged in peer-to-peer communication with a second NFC capable device 110, while also communicating with a baseband access point 912, 914, which may take the form of a cellular base station, for example.

Long-range (e.g., cellular) voice and/or text communications processes may be provided for an active device 110,120 by one or more wireless communications subsystems 8101, comprising transmitter(s) 8152, 8156, receiver(s) 8150, 8154, and digital signal processor(s) (DSP(s)) 8158.

Short-range communications may be provided by either or both of NFC subsystem(s) 8102, 8132, which may or may comprise dedicated antenna systems for short-range aspects; specialized memory device(s) 8116, 8118, and other device subsystems 8121.

Mobile device(s) 110, 120 in accordance with the disclosure may therefore be considered, in the examples shown, example, two-way RF communications devices having voice and data communications capabilities using RF circuitry. In addition, the mobile device 110, 120 may have the capability to communicate with other computer systems 110, 912, 914, etc., via the Internet or other network(s) 900. For example, a device 110, 120 may communicate with one or more servers 912, such as Internet servers, via RF subsystems 8101 and the associated components, including web module 8130e, and further via short-range communications subsystem(s) 8102, such as via web/browser module(s) 8130e. System(s) 8102 may include, for example, one or more Bluetooth communications modules for establishing Bluetooth wireless connection(s), and other communications modules, such as infrared modules or devices, WiFi circuits and modules, and associated components and circuits that may also form part of the RF circuitry.

A predetermined set of applications that control basic and optional device operations, such as data and voice communications 8130A and 81306, may be installed on the device 110,120 during manufacture. Application modules 8130A-N may include native and non-native modules for security 8130D, Web interaction 8130E, social interactions or applications, and the like.

NFC communications module(s) 8130C may include hardware and/or software to enable NFC controller(s) 8132A (which may themselves include hardware, software, and firmware a required) and with the microprocessor 8180, to perform NFC communications tasks, such as through the memory 8116, NFC communications module(s) 8130C may, in various embodiments, support responsive operability for tag 950 reads/writes, whether virtual or physical, by interacting with other modules and apps to affect data stored on tag(s) 950, and/or to obtain or write tag data. Such other modules may for example include web module 8130E, PIM module 8130F, and other software modules 8130N (such as apps and video players, by way of non-limiting examples). Microprocessor(s) 8180 may also cooperate with NFC module(s) 8130C, and with NFC subsystem(s) 8132, which may include one or more NFC chips comprising NFC controller(s) 8132a, and antenna(s) 8132b to facilitate communications with other active and/or inactive NFC device(s) 110, 950, as discussed herein. For example, an NFC communications module 8130C may allow a microprocessor 8180 to control the NFC subsystem 8132 and/or memory stores 8116, 8118.

NFC chips suitable for use in implementing aspects of the disclosure may, for example, comprise one or more PN531 microcontroller-based transmission modules produced by Koninklijke Phillips Electronics N.V. Such NFC chips 8132a may, for example, include both digital and analog circuitry, and one or more contactless Universal Asynchronous Receiver Transmitters (UARTs), cores, and host interfaces. Incorporated circuitry may include output drivers, integrated demodulators, bit decoders, mode detectors and RF-, magnetic, and/or level detectors as suitable. Suitable contactless UARTs may include elements for data processing, Cyclical Redundancy Checking (CRC), parity generation, framing generation and check bit coding and decoding, and/or other functions. Cores may, for example, include one or more 80C51 microcontroller, 32 Kbytes or other amounts of ROM and, one Kbyte or other amounts of RAM, for example. A set of host interfaces may interface with the microprocessor and interface according to such known standards as 12C, serial UART, SPI and USB. NFC circuits may be tuned to any frequency(ies) suitable for accomplishing the purposes disclosed herein, as for example about 13.56 MHz.

NFC (sub)system(s) 8132 may include and/or otherwise cooperate with one or more magnets/magnetometers or other magnet sensors 8134, such as Hall effect sensors, communicatively connected to the microprocessor 8180, 8132a. Sensor(s) 8134 may include components suitable for operation as a Hall effect sensor, including any necessary coils or other circuits. There is also illustrated a magnet/magnetometer 8135 that, in various embodiments, may be advantageously be provided in the form of one or more electromagnets and may operates with microprocessor(s) 8180, 8132am etc., to allow one or more alternate communications pathways using electromagnetic energy, which may be changed to correspond to changing data. Electromagnet(s) 8135 may perform a variety of different functions, including working as an active or passive device in association with other components of the device 110. For example, when an electromagnet 8135 is used instead of a permanent magnet (non-electromagnetic) in the devices of Figure 3, a pulse of energy may be delivered to the Hall effect sensor in another device. The other device receiving the pulse may accordingly activate its NFC circuit. A WiFi connection, for example, in the alternative may be established if an NFC and/or Bluetooth connection is not established. Other modules 8130N may include, for example, software that interoperates with the magnetic sensor 8134 and any magnet or electromagnet 8135 or other magnetic circuitry that may be included within the overall electromagnet 8135.

In addition, personal information manager (PIM) application module(s) 8130F may be or include one or more native modules installed during manufacture. PIM(s) 8130F may be capable of organizing and managing data items, such as email, contacts, calendar events, voice mails, appointments, and task items. The PIM application is also capable of sending and receiving data items via a wireless network. The PIM data items are seamlessly integrated, synchronized and updated via the wireless network with the device user's corresponding data items, such as may be stored in the cloud or as may be associated with a host computer system, for example.

Communication functions, including data and voice communications, may be performed through the communications subsystem 8101, and/or through the short-30 range communications subsystem 8102, which may be part of the circuitry contained in device 810. The specific design and implementation of the communications subsystems 8101 and 8102 may be dependent upon the communications network in which the mobile device 810 is intended to operate.

Such communication functions may, as referenced above, be carried out by data module 81306, voice module 8130A, and web module 8130D, including at the instruction of NFC module 8130C in accordance with the disclosed embodiments, with security for these communications, such as in the granting of access to PIM module 8130F, overseen by a security module 8130D. A security module 8130D may include one or more native or non-native security applications, including anti-virus/anti-malware applications or functions, and protection of PIM information via applications or functions, during external interactions, may occur via NFC or via the Web, for example. Accordingly, security module 8130D may allow for degrees of security in interacting with other devices, such as the aforementioned tags, and/or other devices such as servers (herein defined to include any device acting as an Internet, intranet, extranet, or other public or private network node, host, server, or the like), and particularly with devices or aspects of a device that enable the occurrence of communication exchanges by the device occur over a network, such as the Internet.

As previously noted, NFC processes may be conducted according to any of a wide variety of wireless, short-range communications protocols. Such protocols typically comprise sets of standards to enable devices 110, 120, such as smartphones and the like, to establish radio communication with each other by bringing them into close proximity, or by touching them together. Applications include wireless data transactions and simplified setup of communication sessions involving other communication technologies, such as Wi-Fi and Bluetooth. Communication is also possible between a powered NFC device and a powered or unpowered NFC "tag" or button. Suitable standard currently in use are have been p promulgated by the NFC Forum, which was founded in 2004 by Nokia, Philips and Sony, and which now has more than 160 members. The NFC Forum also promotes NFC and certifies device compliance.

Standards have been developed that cover both NFC Forum - sanctioned communication protocols and other short-range wireless data exchange (NFC) formats. Specifically, an example of NFC standards ISO/IEC 18092 / ECMA-340; Near Field Communication Interface and Protocol-1 (NFCIP-1); ISO/IEC 21481 / ECMA-352; and Near Field Communication Interface and Protocol-2 (NFCIP-2). NFC also encompasses a variety of pre-existing standards including ISO/IEC 14443 both Type A and Type B, and FeliCa. The standards specify the NFC air interface, modulation schemes, coding, transfer speeds, and frame format of the RF interface of NFC devices. The standards also comprise initialization schemes and conditions required for data collision-control during initialization for both active and passive NFC modes. In addition, they define a transport protocol, including protocol activation and data-exchange methods.

NFC protocols sanctioned by the NFC forum typically operate within a globally available and unregulated radio frequency band of 13.56 MHz, and generally have a working distance of up to about 20 centimeters. Three data rates are currently defined in the NFC standards: 106 kilobits per second (kbit/s); 212 kbit/s; and 424 kbit/s.

In addition, the NFC Forum has defined a common data format called NFC Data Exchange Format (NDEF), which can store and transport various kinds of items, such as MIME-typed objects and URLs. The NFC Forum also added the Simple NDEF Exchange Protocol for sending and receiving messages between two NFC-enabled devices.

All of the above-mentioned standards and formats, along with any other existing and applicable NFC standards, are incorporated herein by reference as if fully set forth in their entirety, in their finalized condition.

Both passive and active communications modes have been defined. In active communication modes, both an initiator device and a Target device may generate their own NFC fields 1000 (see e.g., Figures 1 and 2). The initiator device may start the NFC communication, with the target device responding to commands received from the initiator device, as appropriate, by modulating the NFC field 1000 generated by the Target device.

Between two active NFC devices 110, either or both devices can act as either initiator or target. In passive communication mode, one of the devices lacks, or does not employ an ability to independently create an electro-magnetic NFC carrier field 1000, and therefore generally does not serve as an initiator.

As previously noted, among the many uses to which NFC systems and devices, and related methods, can be put is the control of handheld and other mobile communication and computer systems, including for example device(s) 110, 120, etc...

In some environments, there may be a need, or it may otherwise be advantagous, to control when a wireless connection can be activated or deactivated. For example, in some situations, it may be desirable to allow a user to control when her/her device is connected/disconnected to a vehicle via Bluetooth. In some situations, a mobile device may connect and remain connected to a Bluetooth device on an automobile as long as it is within range. This may be undesirable when the user is not yet inside, or has left the vehicle. In some examples, this may cause a privacy concern when other individuals, who may not wish for interactions between the vehicle Bluetooth system and their mobile device, are inside the vehicle.

As another example, a mobile device may be configured to display device data, such as a presentation, on a wirelessly connected projector while visiting a client's or service provider's offices., etc. In some examples, it may be beneficial to control when the mobile device connects to the projector so as to avoid inadvertently displaying private or personal data before the presentation is ready, and/or to avoid exposing data stored on either the mobile device or a system networked to the office to unwanted access.

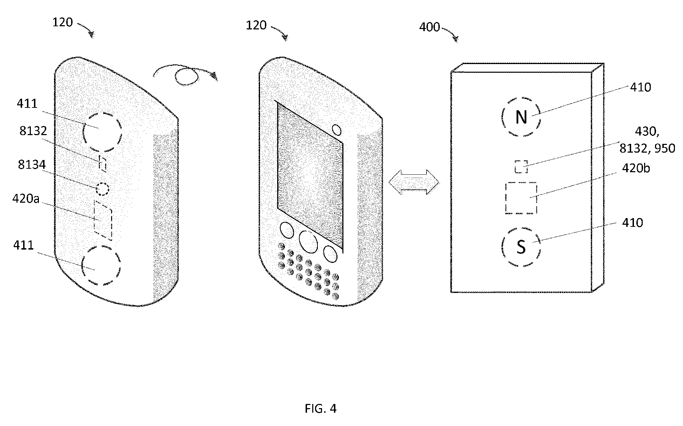

Figures 4-8, show examples of releasable supports 400 for near-field communication (NFC)-capable mobile communication device(s 120. Support(s) 400 can include one or more mechanisms 410, 411, 610, etc., for releasably engaging the mobile device 120. The support 400 can be fabricated of any suitable shape(s) and/or material(s), and can, in some examples, be connected to or integral with the surface of any structure or device. For example, a support 400 can be connected to or integral with a vehicle dashboard, a control panel, a device cradle, a seat back, a wall, a device housing, a desk or table, or any suitable surface. In some examples, the support 400 may include visual indicia (e.g. a device outline, recesses, etc.) indicating one or more positions in which a mobile device 120 can be engaged, to accomplish any one or more desired effects. In other examples, an integrated support may include no indicia or external indication such that a user may require prior knowledge of where a device can be engaged; or there may be only one or a few physically possible and optionally apparent alternatives.

As illustrated by the embodiment in Figure 4, the support 400 can include one or more magnets 410 for releaseably and magnetically engaging the mobile device 120. The support 400 in Figure 4 includes two magnets 410 positioned to engage the mobile device in a landscape orientation. In other examples, one, two , four, or any number or arrangement of magnets 410 can be used. In some examples, the magnet(s) 410 can have specific magnetic polarizations (e.g. North or South), while in others, the magnet(s) may have any magnetic polarization arrangements.

In some examples, the magnet(s) 410 can be permanent magnets, electromagnets, or various combination(s) thereof.

Magnets 410 can be configured to magnetically engage one or more ferromagnetic elements 411 on the mobile device 120. In some embodiments, housing 8120 of the mobile device 120 may include a ferromagnetic material. In some embodiments, the mobile device 120 can include one or more ferromagnetic elements 411 proximate to the exterior of the device 120 so as to be engageable by the support magnet(s) 410. For example, the mobile device 120 may have one or more ferromagnetic plates 411 on or proximate to an interior or exterior surface of a rear portion of the housing 8120. In another example, the mobile device 120 may have a portion or all of the housing 8120, 411 may comprise a ferromagnetic material which can supportably engage the support magnets 410.

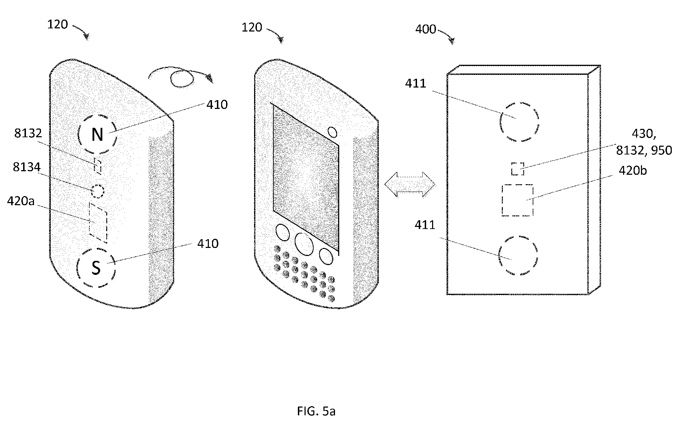

Similarly, in some embodiments, as illustrated by the example in Fig. 5a, the mobile device 120 can include one or more magnets 410 for releaseably and magnetically engaging the support 400. The mobile device 120 in Fig. 5a includes two magnets 410. In other examples, one, two , four, or any number or arrangement of magnets 410 can be used. In some examples, the magnet(s) 410 can have specific magnetic polarizations (e.g. North or South), while in others, the magnet(s) may have any magnetic polarization arrangements.

In some examples, the magnet(s) 410 can be permanent magnets, electrically-induced magnets, or some combination thereof.

The magnets 410 can be configured to magnetically engage one or more ferromagnetic elements 411 on the support 400. In some embodiments, a surface of the support 400 may include a ferromagnetic material. In some embodiments, the support 400 can include one or more ferromagnetic elements 411 proximate to the exterior surface of the support so as to be engageable by the mobile device magnet(s) 410. For example, the support 400 may have one or more ferromagnetic plates 411 on or proximate to the surface of the support. In another example, a portion or an entire exterior surface of the support 400 may comprise a ferromagnetic material which can supportably engage the mobile device magnets 410.

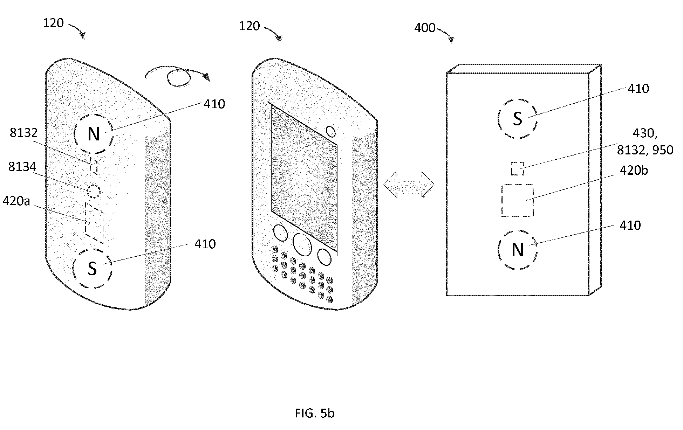

In some embodiments, as illustrated by the example in Fig. 5b, the mobile device 120 and the support 400 can each include one or more magnets 410 for magnetically engaging each other. The mobile device 120 and support 400 in Fig. 5b each include two magnets 410. In other examples, one, two , four, or any number or arrangement of magnets 410 can be used. As illustrated in Fig. 5b, in some examples, the magnetic polarizations of the mobile device magnet(s) 410 can be configured to correspond to respective support magnets 410 having opposite polarizations.

In accordance with any of the examples herein, the magnets 410 and/or ferromagnetic elements 411 can be configured such that the magnetic force is sufficient to support the weight of the mobile device 120. In some examples, the magnets 410 and/or ferromagnetic elements 411 can be configured such that the magnetic force is sufficient to retain the mobile device when it is engaged with a support in a moving vehicle. Moreover, magnets 410 may be attached to surfaces of supports 400 and/or housings 8120, or wholly or partially embedded within such supports and/or housings, so as to hide or mask their appearance, for functional and/or aesthetic reasons.

In some examples, the magnetic engagement can provide tactile and/or audible feedback that the mobile device 120 has been engaged with or disengaged from the support 400. For example, either engagement or disengagement of a device 120 with releasable supports 410 may cause a vibration and/or audible alarm tone. Such feedback may be customizable by a user of the device, and may be tailored to indicate dfferent states or purposes to which a device 120 may be put while supported. For example, engagement of a device 120 by a support 400 at home, in an automobile, in a user's own office, and/or in a client's or unknown office may all cause a properly-configured profile application to execute a different feedback mechanism, and thereby, for example, to notify the user of the type of connection which may have been made.

As illustrated, for example in the Figures 4-8, the support 400 and/or mobile device 120 can include mechanism(s) for releaseable engagement with one another. In some examples, mechanisms can be configured and/or arranged such that when engaged, the mobile device 120 is in enabling alignment with the support 400.

For example, as illustrated in Fig. 4, the mobile device 120 can include a magnetic sensor 8134, 726 such as a Hall Effect sensor which may be configured to detect a magnetic field created by support magnet(s) 410 to determine when the mobile device 120 is engaged with the support 400. The engagement mechanism(s) can be configured to align the mobile device 120 and the support 400 such that the magnetic field from the support magnet(s) 410 can be detected by the magnetic sensor.

In some examples, the mobile device 120 and support 400 can include wireless charging elements 420a, 420b such as inductive charging elements. Releaseable engagement mechanisms 410, 411, and/or 610 on the mobile device 120 and/or support 400 can be configured and/or arranged such that when the mobile device 120 and the support 400 engaged, their respective wireless charging elements 420a, 420b are brought into sufficien proximity, and/or are otherwise positioned, to enable wireless charging of batteries and/or other devices of a power system of the device 120. Such charging elements may be attached to and/or wholly or partially embedded with the support 400, so as to hide or mask their appearance, for functional and/or aesthetic reasons.

As illustrated, for example in the Figures 4-8, the support 400 can include one or more persistent memory(ies) 430, 8132, 950 accessible by an NFC system 8132 of the mobile device 120. Such persistent memory(ies) 430 can, in some examples, be part of an NFC tag 950, an NFC system 8132 or another NFC-capable device. The releaseable engagement mechanisms on the mobile device 120 and/or support 400 can be configured and/or arranged such that when the mobile device 120 and the support 400 engaged, the persistent memory can be accessed by the mobile device 120 NFC system 8132.In various examples, persistent memory(ies) 430 can include data, which when read by an NFC system 8132 of the mobile device 120, can cause the mobile device 120 to execute one or more wireless communication functions.

Data stored in memory(ies) 430 can be configured for causing any of a wide variety of communication functions, in any of a wide variety of ways.

For example, a persistent memory 430 can include data suitable for causing any one or more processors 8180, 8158, 8138, 8132(a), etc., of a mobile device 120 to connect with and/or otherwise communicate with any one or more wireless resources 110, 914, 912, etc. For example, the data may include address information, such as a uniform resource locator or other address associated with a device communicatively linked to a local- and/or wide-area network, etc; a media access control (MAC) address, Bluetooth profile information, device ID or information, WiFi SSID, URL, security credentials, passcodes, and the like; and/or executable instruction sets, suitable for use in enabling a processor 8180, 8158, 8138, 8132(a), etc. to locate such a resource, execute one or more corresponding aplications 8130, and establish one or more communication sessions therewith.

Thus, memory(ies) 430 can include address data, executable instruction sets, and/or any other type(s) of data useful in causing execution by processor(s) 8180, 8158, 8138, 8132(a), etc. of such functions.

Wireless communication function(s) executed in accordance with this disclosure can include any desired functions, including for example establishing a wireless communication session(s) with any one or more wireless communication resources 110 such as an active NFC-capable device, a Bluetooth-enabled device, a WiFi or WiFi-Direct capable device, a networking device and the like. In some examples, the wireless communication function can include maintaining a wireless communication with a wireless communication resource.

Devices 110 with which a device 120 supported by a releasable support 400 can communicate can include any of a very wide variety of devices, including radio(s), television(s), music and/or movie players, and/or other audio/video devices; projectors; printers; speakers; and/or other processor(s) 912, 914, etc.

In some embodiments, a mobile device 120 can include one or more processors 8180, 8158, 8138, 8132(a), etc., configured to receive signal(s) generated by one or more magnetic field sensors 8134, 726. In some examples, upon receipt of a signal representing the proximity of a magnetic field, at least one processor can be configured to interpret data read from and/or otherwise transferred from the NFC device 430, 8132, 950 on the support 400, and to execute a corresponding wireless communication function.

In some examples, the data may be read, requested, received, or otherwise transferred from the support NFC device 430 to the mobile device 120 after detection of the magnetic field. In other examples, the data may be transferred before the detection of the magnetic field, and can be subsequently interpreted by the processor after the detection of the magnetic field.

For example, when a user moves a mobile device 120 to engage a support 400 on a car dashboard, support magnet(s) 410 can magnetically engage a housing 8120 and/or other portion of the mobile device 120 and retain the device in an engaged position. In this position, a magnetic field sensor 8134 on the mobile device 120 can detect the magnetic field of one or more of the support magnets 410, and can send a signal to one or more processors 8180, 8158, 8138, 8132(a), etc. In response, at least one processor on the mobile device 120 interprets the data transferred from the support persistent memory 430 / support NFC device 8132, 950. In one example, the data can represent Bluetooth profile information identifying the car audio system. With this data, the processor on the mobile device 120 can be configured to connect with the car audio system.

In some examples, the processor(s) can be configured to maintain a wireless communication function (such as the Bluetooth connection with the car audio system) as long as the magnetic field can be detected and/or as long as the persistent memory (such as the NFC tag) can be read or otherwise accessed. Thus, for example, when the magnetic field is no longer detected and/or the persistent memory can no longer be accessed, the processor(s) can be configured to end, disconnect, or otherwise stop executing the wireless communication function. Thus, for example, a user of a mobile device 120 can automatically disconnect the device 120 from an automobile Bluetooth audio device 110, a client's projection system 110, etc., simply by disengaging the mobile device 120 from the support 400 and walking away from an NFC communication range associated with the device 120's NFC system 8132.

For example, in the example scenario above, the mobile device 120 can maintain the Bluetooth connection with the car audio system while in the engaged position. When the mobile device 120 is removed from the engaged position, the magnetic field sensor 8134 may no longer detect the magnetic field from the support magnet(s), and/or the NFC subsystem 8132 may no longer be able to access the persistent memory 430. In response, the processor(s) can be configured to disconnect from the car audio system.

In some situations, maintaining a wireless communication function only while the wireless device 120 is engaged with the support 400 may reduce power consumption of the wireless device 120, for example, by reducing wireless transmissions or by completing turning off one or more wireless system(s) 8102, etc., such as a wireless radio. In some examples, the mobile device 120 may reduce power consumption by not actively searching for certain wireless connections when the mobile device 120 is not in an engaged position.

In some situations, executing or maintaining a wireless communication function only when a wireless device 120 is engaged with the support 400 may improve privacy or security. For example, if a mobile device 120 is configured to only connect to a conference room projector or external display via Wifi Direct when the mobile device 120 is engaged with a support 400 at a podium. In some examples, this may prevent personal or private information from inadvertently being display by the projector when the mobile device 120 is not engaged with the support 400.

Other examples of wireless communication functions include but are not limited to wireless printing, linking a mobile phone to a local phone device or system, transmitting multimedia signals for output on an external display and/or audio system, and the like.

In some examples, data transferred from persistent memory(ies) 430 and/or other NFC device(s) 950, etc., of a support 400 can cause one or more processors 8180, 8158, 8138, 8132(a), etc., to change to a different operating mode or user-established operational profile. For example, in the example conference room projector 110 scenario described above, data transferred from the other NFC device may include data indicating that the wireless communication function may be displaying information to others. In response, the wireless device 120 may be configured, in response, to change to a presentation mode or profile which may include for example, disabling pop-up notifications or to close e-mail or instant messaging programs, and/or execute other functions related to maintenance of data security.

In some examples, the configuration or arrangement of engagement mechanisms 410, 411, 610 may allow for different engagement positions or orientations. For example, the support 400 illustrated in Fig. 4 has two magnets 410. In some examples, a mobile device 120 having a ferromagnetic casing can engage the support magnets 410 in a portrait orientation as illustrated in Fig. 4, or in a landscape orientation.

In some examples, the mobile device's magnetic field sensor 8134, 726 may detect a different magnetic field magnitude and/or direction based on the different orientation of the device and therefore the different orientation/position of the magnetic field sensor 8134, 726.

In some examples, the processor(s) 8180, etc. may be configured to change the wireless communication function, or the device profile/mode based on the magnetic field sensor 8134, 726. For example, if the magnetic field signal(s) generated by the sensor 8134, 726 indicate that the wireless device 120 is engaged with a car support 400 in a landscape orientation, the processor(s) may be configured to execute a GPS application and to wirelessly communicate audio or other signals to the car's audio system. Conversely, if the magnetic field signal(s) generated by the sensor 8134, 726 indicate that the wireless device 120 is engaged with a car support 400 in a portrait orientation, the processor(s) may be configured to execute a music application and to wirelessly communicate audio or other signals to the car's audio system.

While the above example describes two different modes or wireless communication functions, in other examples, the processor(s) can be configured to execute any number of modes and/or wireless functions based on the direction and optionally the magnitude of the magnetic field detected by the magnetic field sensor 8134. For example, if the top of a wireless device 120 with a ferromagnetic housing is analogized to a compass needle, the device 120 could engage the two-magnet support in Fig. 4 in a N, NE, E, SE, S, SW, W, or NW direction with each of these orientations potentially triggering one or more diffuerent NFC communication modes and/or wireless functions.

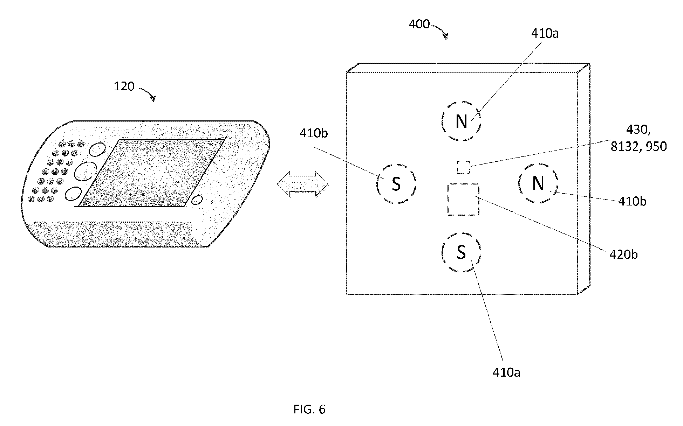

In some examples, a support 400 can include multiple sets of magnets for engaging a mobile device 120. For example, in Fig. 6, a first set of magnets 410a can be positioned to engage the mobile device 120 in a portrait orientation, and a second set of magnets 410b can be positioned to engage the mobile device 120 in a landscape orientation.

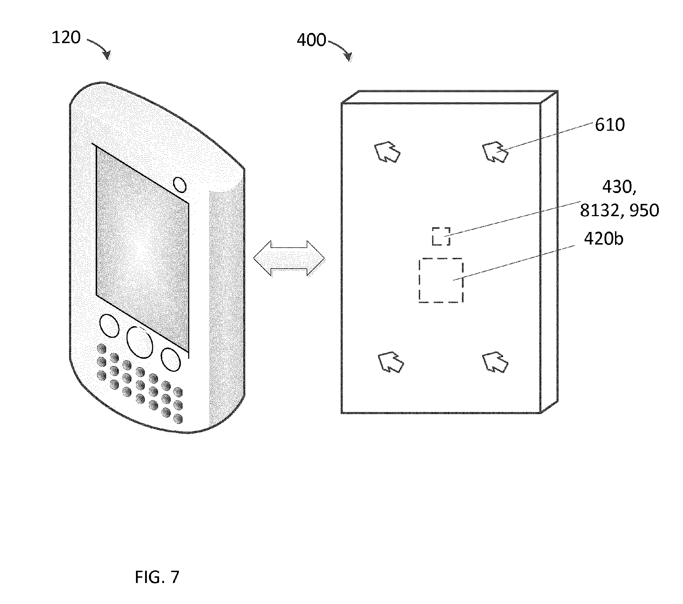

As illustrated for example in Figure 7, the support 400 can include one or more brackets, detents, and/or other mechanical attachments 610 for releaseably engaging the mobile device 120. In some examples, the mechanical attachments can engage one or more corresponding attachment mechanisms on a rear or other surface of the mobile device 120. In some examples, the mechanical attachments can include arms and/or other brackets(not shown) for wrapping around and/or engaging side and/or front surfaces of the mobile device 120. Such mechanical attachments 610 can be used instead or in addition to magnetic attachments 410, 411.

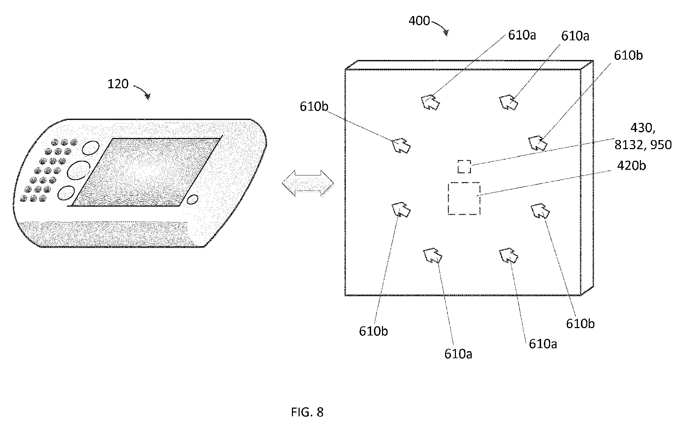

As illustrated for example in Figure 8, the support 400 can include different sets of mechanical attachments 610a, 610b for releaseably engaging the mobile device 120 in different orientations, such as those described above in connection with magnetic supports 410, 411, with similar options for execution of various communication functions determined at least partly based on support orientation.

Alternatively, engagement of any or all of mechanisms 610, 410, 410a, 410b can cause a mobile device 120 to be positioned such that when a mobile device 120 is engaged with the support 400, the mobile device 120 is in enabling alignment (e.g. NFC devices can be accessed or wireless charging elements can effect wireless charging) with the support 400 irrespective of the mobile device's orientation.

As noted above, in various examples persistent memory(ies) 430 and/or other NFC device(s) 8132, 950 on the support 400 can include data identifying a location such as a car, office or home, which data may, for example, be configured cause processor(s) 8180, 8158, 8138, 8132(a), etc. of the device 120 to change one or more operating profiles of the device accordingly.

In some examples, data stored in persistent memory 430/ NFC device 8132, 950 on the support can be associated with external processing resources 110, 912, 914, etc. Upon receiving and interpreting such data, the mobile device processor(s) 8180, 8158, 8138, 8132(a), etc. may enable access to such external processing resources using the device's I/O systems 8101, 8121, 8102, 8132, 8108, 8106, etc.

For example, in an office, the processor(s) may configure the mobile device 120 to wirelessly or otherwise access a presentation system 110, access an office database or server 912, 914, share mobile device data or resources with one or more resources linked to a network 900, view a security camera feed, etc.

In some examples, processor(s) 8180, 8158, 8138, 8132(a), etc. of the mobile device 120 and/or processor(s) 912, 914, etc., at the office may be able to automatically wipe or sequester data transferred to or from a mobile device 120 when the mobile device 120 is disengaged from the support 400, using automatic disconnection or disengagement process(es) such as those described above.

In some examples, when a mobile device 120 is engaged with the support 400 and is accessing data from office resources, the processor(s) 8180, 8158, 8138, 8132(a), etc., can be configured to disable functions, such as web access, so that data cannot be transferred from or through the mobile device. In some scenarios, this may enable read-only access to office resources only while the device is engaged with the support.

In a home or commercial environment. a wireless device may be configured to wirelessly access devices or systems such as a security system, lighting system, thermostat, 912, 914, etc. only when the wireless device 120 is engaged with a support 400 inside an appropriate building.

In other examples, an mobile device 120 can be engaged with a support 400, by means of supports 410, 411, 610, and NFC devices 423, etc., on a vehicle information system such as a plane, bus, train, etc. In some examples, when engaged with a support 400, the mobile device 120 can be configured to enable a multimedia file on the mobile device to be played on a seat-back entertainment system, to play a multimedia file from the vehicle entertainment system on one or more speakers 8110, 8160, and/or other I/O devices of mobile device, to order food or entertainment, to request service, etc.

In further aspects, the disclosure provides systems, devices, methods, and computer programming products, including non-transient machine-readable instruction sets, for use in implementing such methods and enabling control of mobile and other communication and computing devices.

Although the disclosure has been described and illustrated in exemplary forms with a certain degree of particularity, it is noted that the description and illustrations have been made by way of example only. Numerous changes in the details of construction and combination and arrangement of parts and steps may be made. Accordingly, such changes are intended to be included in the invention, the scope of which is defined by the claims.

Except to the extent explicitly stated or inherent within the processes described, including any optional steps or components thereof, no required order, sequence, or combination is intended or implied. As will be will be understood by those skilled in the relevant arts, with respect to both processes and any systems, devices, etc., described herein, a wide range of variations is possible, and even advantageous, in various circumstances, without departing from the scope of the invention, which is to be limited only by the claims.

## Claims

1. A releasable support for a near-field communication (NFC) capable mobile communication device, the support comprising:
at least one magnet disposed so as to magnetically engage, and thereby releaseably support, the NFC-capable mobile communication device; and
persistent memory accessible by an NFC system of the NFC-capable mobile communication device, the persistent memory comprising data for causing the NFC-capable mobile communication device to execute at least one wireless communication function.

2. The releasable support of claim 1, wherein the at least one wireless communication function comprises establishing a wireless communication session with at least one active NFC-capable device.

3. The releasable support of claim 1 or claim 2, wherein the at least one active NFC communication device comprises a Bluetooth-enabled device.

4. The releasable support of any preceding claim, wherein the at least one wireless communication function comprises maintaining an established wireless communication session with at least one active NFC-capable device.

5. The releasable support of any preceding claim, comprising a plurality of magnets, wherein the at least one wireless communication function to be executed is determined at least partly based on an orientation of the NFC-capable mobile communication device relative to the plurality of magnets.

6. The releasable support of any preceding claim, comprising a close-proximity wireless battery charger.

7. A near-field communication (NFC) capable mobile communication device, comprising:
an NFC system configured for data transfer from at least one other NFC-capable device;
at least one magnetic field sensor configured for detecting proximity of a magnet and generating a corresponding magnetic field proximity signal;
a housing engageable by the at least one magnet and configured for supporting the mobile communication device when engaged by the at least one magnet; and
at least one processor configured, conditioned upon receipt of a magnetic field proximity signal generated by the at least one magnetic field sensor, to interpret data transferred from the at least one other NFC device, and execute a corresponding wireless communication function.

8. The mobile communication device of claim 7, wherein the at least one wireless communication function comprises establishing a wireless communication session with at least one active NFC-capable device, and optionally
wherein the at least one active NFC communication device comprises a Bluetooth-enabled device, and further optionally
wherein the at least one wireless communication function comprises maintaining an established wireless communication session with at least one active NFC-capable device.

9. The communication device of claim 7 or claim 8, wherein the at least one wireless communication function to be executed is determined at least partly based on an orientation of the NFC-capable mobile communication device relative to the at least one magnet.

10. The mobile communication device of any of claims 7 to 9, comprising a close-proximity wireless battery charging system.

11. A near-field communication (NFC) capable mobile communication device, comprising:
an NFC system configured for data transfer from at least one other NFC-capable device;
a housing comprising at least one magnet configured for supporting the mobile communication device when adjacent to a magnetic support device;
at least one processor configured to:
interpret data transferred from memory associated with at least one NFC device attached to the magnetic support device; and,
based at least partly on the interpretation, to execute a corresponding wireless communication function.

12. The mobile communication device of claim 11, wherein the at least one wireless communication function comprises establishing a wireless communication session with at least one active NFC-capable device, and optionally
wherein the at least one active NFC communication device comprises a Bluetooth-enabled device, and further optionally
wherein the at least one wireless communication function comprises maintaining an established wireless communication session with at least one active NFC-capable device.

13. The mobile communication device of claim 11 or claim 12, comprising at least one magnetic field sensor configured for detecting proximity of a magnetic support device and generating a corresponding magnetic field proximity signal; wherein execution of the wireless communication function is conditioned upon generation of the magnetic field proximity signal.

14. The mobile communication device of any of claims 11 to 13, wherein the at least one wireless communication function to be executed is determined at least partly based on an orientation of the NFC-capable mobile communication device relative to magnetic support device.

15. The mobile communication device of any of claims 11 to 14, comprising a close-proximity wireless battery charging system.
